# EUROPEAN PATENT APPLICATION

(11) **EP 3 127 450 A1**
(43) Date of publication of application: **08.02.2017**
(21) Application number: 16182120.2
(22) Date of filing: 01.08.2016
(51) Int. Cl.: A45C 13/30, A45F 3/04, A45F 5/00

(54) **NECK STRAP STRUCTURE AND AUXILIARY MEMBER THEREOF**

(30) Priority: 04.08.2015 US 201562200860 P
(71) Applicant: Hu, Tienchi, Taipei City 111 (TW)
(72) Inventor: Hu, Tienchi, Taipei City 111 (TW)
(74) Representative: Reichert & Lindner Partnerschaft Patentanwälte

(57) **Abstract**

An auxiliary member (204, 3, 4, 7) for a neck-hanging article (29) is provided. The neck-hanging article (29) has a strap body (20). The auxiliary member (204, 3, 4, 7) includes a first end (2041) and a second end (2042). The first end (2041) is coupled to a contact part (203) of the strap body (20). The second end (2042) is detachably coupled to an object (28) loaded by a user, so that a stress exerted by the strap body (20) is diverted from a neck of the user to the loaded object (28).

## Description

### CROSS-REFERENCE TO RELATED APPLICATIONS

The present application claims the benefit of priority from prior-filed US provisional application bearing Serial No. US 62/200,860 and filed August 4, 2015.

### FIELD OF THE INVENTION

The present invention relates to a neck strap structure and an auxiliary member thereof, and more particularly to a neck strap structure for carrying a camera and an auxiliary member thereof.

### BACKGROUND OF THE INVENTION

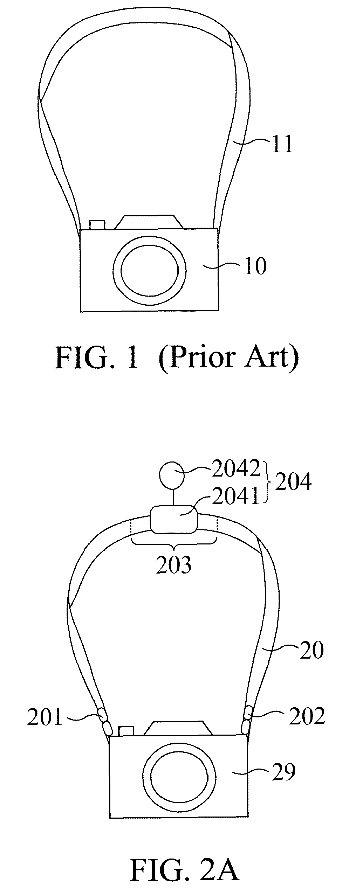

FIG. 1 schematically illustrates the usage of a conventional camera strap. As shown in FIG. 1, a camera body 10 is hung around a user's neck through a strap 11. However, the use of the strap 11 still has some drawbacks. For example, a main body and a lens module of a single-lens reflex camera have a total weight up to 2 kilograms. If the single-lens reflex camera is hung around the user's neck for a long time, the single-lens reflex camera becomes a heavy burden on the user and the user usually feels uncomfortable.

Therefore, there is a need to provide a novel neck strap structure in order to overcome the above drawbacks.

### SUMMARY OF THE INVENTION

The present invention provides an auxiliary member and a neck strap structure for alleviating the discomfort of carrying the neck-hanging article.

In accordance with an aspect of the present invention, there is provided an auxiliary member for a neck-hanging article with a strap body. The auxiliary member includes a first end and a second end. The first end is coupled to the strap body. The second end is detachably coupled to an object loaded by a user, so that a stress exerted by the strap body is diverted from a neck of the user to the loaded object.

In an embodiment, the loaded object has a hang ring or a handle, wherein the second end of the auxiliary member is detachably coupled to the hang ring or the handle.

In an embodiment, the first end of the auxiliary member has a first collar, and the first collar is movably coupled to a contact part of the strap body.

In an embodiment, the first end of the auxiliary member has at least one set of movable snap fasteners that constitute the first collar.

In an embodiment, the first end of the auxiliary member is fixed on the strap body by a stitching means, a gluing means or a snap-fit means, or the first end of the auxiliary member is integrally formed with the strap body.

In an embodiment, the second end of the auxiliary member has a second collar, which is constituted by one or more sets of movable snap fasteners.

In an embodiment, the second end of the auxiliary member has a hook, wherein the hook is penetrated through a hang ring or a handle of the loaded object, or the hook is penetrated through a perforation of the hang ring or the handle of the loaded object.

In an embodiment, the second end of the auxiliary member has a buckling element or a clipping structure that is coupled to a movable snap fastener of the loaded object.

In an embodiment, the second end of the auxiliary member has a clipping structure, and the clipping structure is coupled to a hang ring or a handle of the loaded object.

In accordance with another aspect of the present invention, there is provided a neck strap structure. The neck strap structure includes a strap body and an auxiliary member. The strap body has a contact part, wherein two ends of the strap body are fixed on a neck-hanging article. A first end of the auxiliary member is coupled to the contact part of the strap body, and a second end of the auxiliary member is coupled to an object loaded by a user, so that a stress exerted by the strap body is diverted from a neck of the user to the loaded object.

In an embodiment, the first end of the auxiliary member is fixed on the strap body by a stitching means, a gluing means or a snap-fit means, or the first end of the auxiliary member is integrally formed with the strap body.

The above objects and advantages of the present invention will become more readily apparent to those ordinarily skilled in the art after reviewing the following detailed description and accompanying drawings, in which:

### BRIEF DESCRIPTION OF THE DRAWINGS

- FIG. 1: schematically illustrates the usage of a conventional camera strap;
- FIG. 2A: schematically illustrates the structure and the outer appearance of an auxiliary member for a camera strap according to the present invention;
- FIG. 2B: schematically illustrates the connection between the camera strap and a loaded object through the auxiliary member;
- FIG. 3: schematically illustrates a strap structure with an auxiliary member according to a first embodiment of the present invention;
- FIG. 4: schematically illustrates a strap structure with an auxiliary member according to a second embodiment of the present invention;
- FIG. 5: schematically illustrates a strap structure with an auxiliary member according to a third embodiment of the present invention;
- FIG. 6: schematically illustrates a strap structure with an auxiliary member according to a fourth embodiment of the present invention; and
- FIGS. 7A-7C: schematically illustrate some other examples of the strap structure with the auxiliary member according to the present invention.

### DETAILED DESCRIPTION OF THE PREFERRED EMBODIMENT

The present invention will now be described more specifically with reference to the following embodiments. It is to be noted that the following descriptions of preferred embodiments of this invention are presented herein for purpose of illustration and description only. It is not intended to be exhaustive or to be limited to the precise form disclosed.

FIG. 2A schematically illustrates the structure and the outer appearance of an auxiliary member for a camera strap in order to overcome the drawbacks of the conventional technologies. As shown in FIG. 2A, a first end 201 and a second end 202 of a strap body 20 are fixed on a camera 29. The fixing structures are well known to those skilled in the art, and are not redundantly described herein. For alleviating the oppression of the conventional strap on the neck, the camera strap is additionally equipped with an auxiliary member 204. The auxiliary member 204 is located at a contact part 203 of the strap body 20, wherein the contact part 203 is in contact with the user's neck. A first end 2041 of the auxiliary member 204 is coupled to the contact part 203 of the strap body 20. A second end 2042 of the auxiliary member 204 has a movable fastening element. The movable fastening element is coupled with an object loaded by the user. Consequently, the stress originally applied to the user's neck will be diverted to the loaded object. It is noted that the width of the contact part 203 is not restricted. The width of the contact part 203 shown in the drawing is presented herein for purpose of illustration and description only.

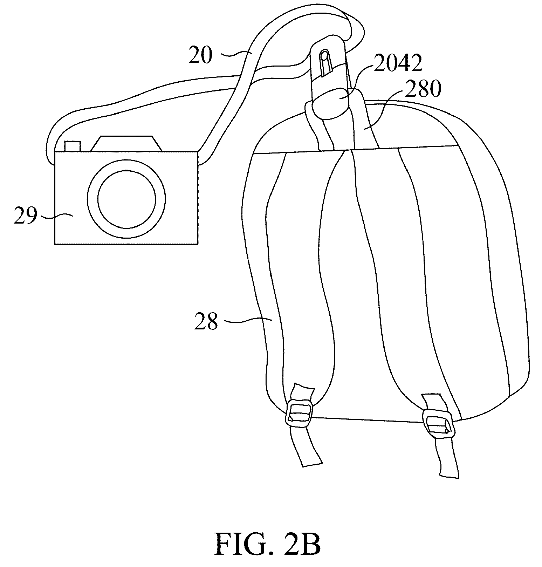

FIG. 2B schematically illustrates the connection between the camera strap and a loaded object through the auxiliary member. For example, the loaded object is a double-shoulder backpack 28. When the user wears the double-shoulder backpack 28, the movable fastening element at the second end 2042 of the auxiliary member 204 is coupled to a handle 280 of the double-shoulder backpack 28. Of course, the movable fastening element at the second end 2042 of the auxiliary member 204 may be coupled to a similar part (e.g., a hang ring or a hook) of the double-shoulder backpack 28. Consequently, the stress originally exerted by the strap body 20 will be diverted from the user's neck to the two shoulder straps of the double-shoulder backpack 28 and the contact points between the strap body 20 and the shoulders of the user. In such way, the discomfort of carrying the camera strap can be effectively alleviated. That is, the strap structure of the present invention is advantageous over the conventional strap structure. In this embodiment, the loaded object is a double-shoulder backpack 28. In some other embodiments, the loaded object includes another type of backpack, for example a single-shoulder backpack. The present invention provides a strap structure with an auxiliary member. Hereinafter, some examples of the strap structure with the auxiliary member will be illustrated in more details.

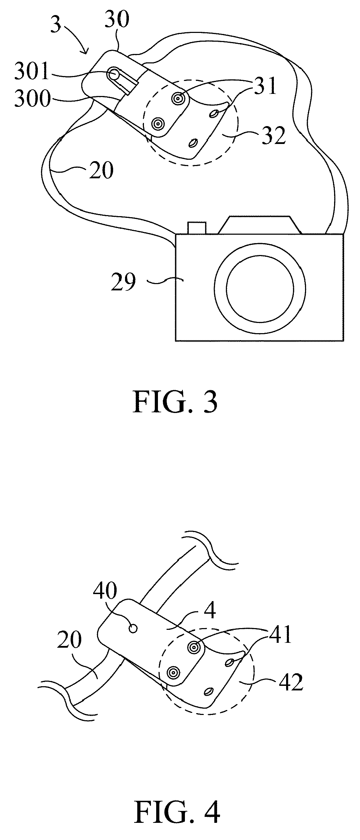

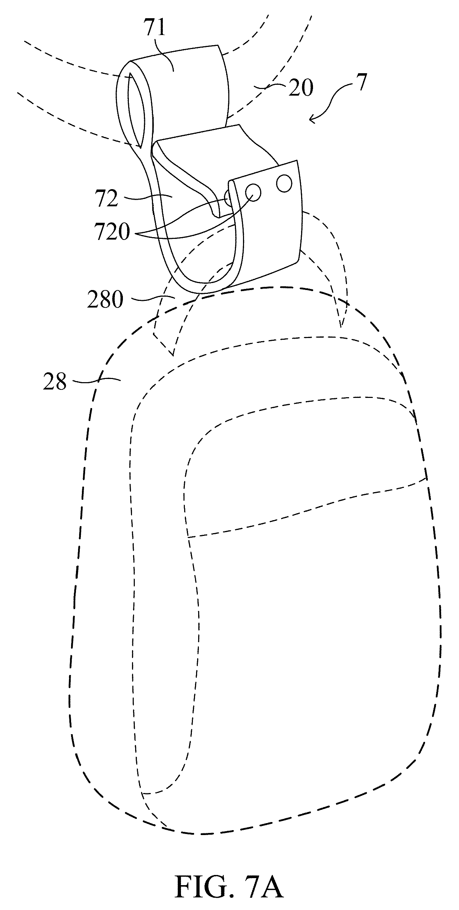

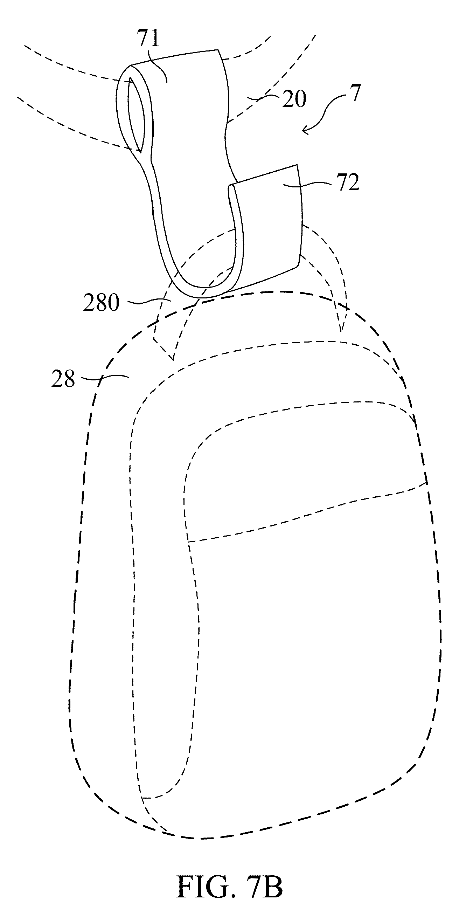

FIG. 3 schematically illustrates a strap structure with an auxiliary member according to a first embodiment of the present invention. As shown in FIG. 3, a first end of the auxiliary member 3 has a first collar 30. The detailed structure of the first collar 30 may also be referred to the collar as shown in FIG. 7A. The first collar 30 allows the strap body 20 to pass through. Consequently, the auxiliary member 3 can be sheathed around the strap body 20 and slid along the strap body 20 without being detached from the strap body 20. Moreover, in case that the auxiliary member 3 is in a non-usage state, the auxiliary member 3 can be slid to any position where the user is not adversely affected. For example, the auxiliary member 3 may be moved to the position near the junction between the strap body 20 and the camera 29. A second end of the auxiliary member 3 has a second collar 32, which is constituted by one or more sets of movable snap fasteners 31. The second collar 32 acts as the above-mentioned movable fastening element. That is, the second collar 32 is coupled to the handle 280 of the double-shoulder backpack 28. Consequently, the stress originally applied to the user's neck will be diverted to the loaded object. Optionally, a pocket-type accommodation space 300 is formed on the first collar 30. The pocket-type accommodation space 300 is used for accommodating a small object such as memory card. Moreover, a protective buckling element 301 is further located at the mouth part of the pocket-type accommodation space 300 in order to prevent the small object from falling out of the pocket-type accommodation space 300 intentionally.

FIG. 4 schematically illustrates a strap structure with an auxiliary member according to a second embodiment of the present invention. As shown in FIG. 4, a first end of the auxiliary member 4 is directly fixed on the strap body 20 and not slidable. For example, the first end of the auxiliary member 4 is directly fixed on the strap body 20 by a stitching means, a gluing means or a snap-fit means, or the first end of the auxiliary member 4 is integrally formed with the strap body 20. Moreover, as shown in FIG. 4, the first end of the auxiliary member 4 is fixed on the strap body 20 through one or more sets of movable snap fasteners 40. Similarly, a second end of the auxiliary member 4 has a second collar 42, which is constituted by one or more sets of movable snap fasteners 41. The second collar 42 acts as the above-mentioned movable fastening element. That is, the second collar 42 is coupled to the handle 280 of the double-shoulder backpack 28. Consequently, the stress originally applied to the user's neck will be diverted to the loaded object.

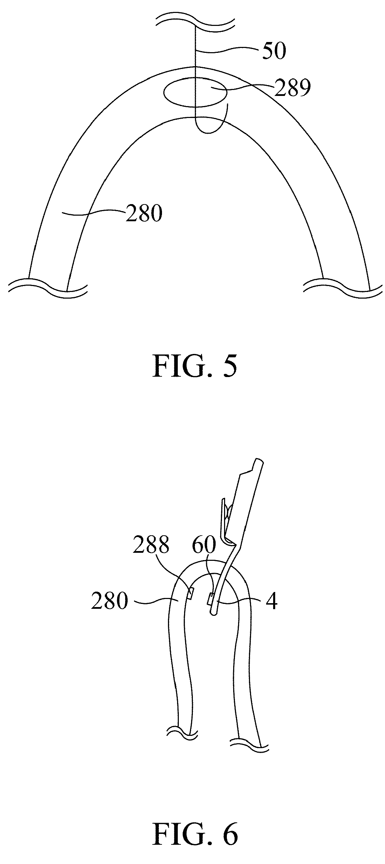

FIG. 5 schematically illustrates a strap structure with an auxiliary member according to a third embodiment of the present invention. In this embodiment, the movable fastening element is a hook 50 or any other appropriate element. Moreover, the handle (or a hang ring) 280 has a structure mating with the hook 50. As shown in FIG. 5, the handle (or the hang ring) 280 has a perforation 289. After the hook 50 is penetrated through the perforation 289, the second end of the auxiliary member 4 is coupled with the handle (or the hang ring) 280.

FIG. 6 schematically illustrates a strap structure with an auxiliary member according to a fourth embodiment of the present invention. In this embodiment, the handle (or the hang ring) 280 has a movable snap fastener 288, and the second end of the auxiliary member 4 has a buckling element 60. Due to the engagement between the movable snap fastener 288 and the buckling element 60, the second end of the auxiliary member 4 is coupled with the handle (or the hang ring) 280.

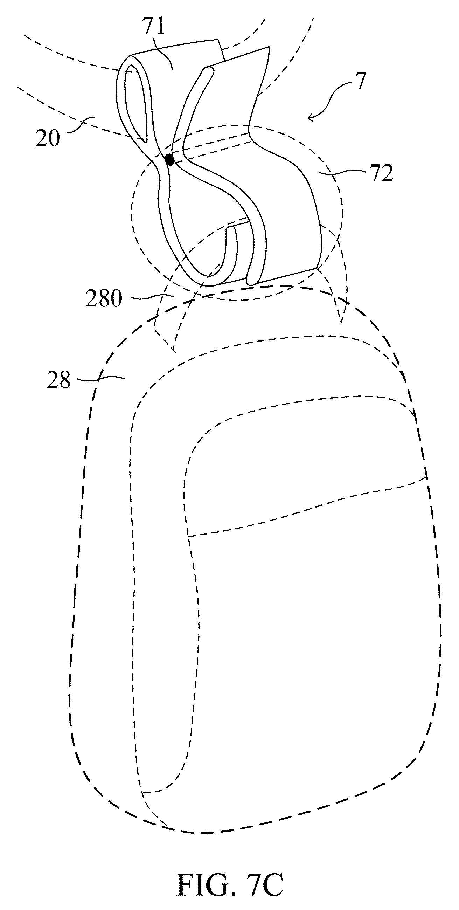

FIGS. 7A-7C schematically illustrate some other examples of the strap structure with the auxiliary member according to the present invention. As shown in FIG. 7A, a first end 71 of the auxiliary member 7 is a collar, which is coupled to and sheathed around the strap body 20. A second end 72 of the auxiliary member 7 is a movable collar, which is detachably coupled the handle (or the hang ring) 280 through one or more sets of movable snap fasteners 720. In comparison with FIG. 7A, the second end 72 of the auxiliary member 7 is a curvy hooking structure for holding the handle (or the hang ring) 280. Since the second end 72 of the auxiliary member 7 is pulled down by the weight of the backpack 28 and the strap body 20 is also pulled down by the weight of the camera, the backpack 28 and the camera can be easily connected with each other or easily detached with each other. In the embodiment of FIG. 7C, the second end 72 of the auxiliary member 7 is an elastic clipping structure that can clamp the handle (or the hang ring) 280 in a fast and simple manner.

From the above descriptions, the present invention provides an auxiliary member. The auxiliary member can be widely applied to a neck-hanging article such as a camera or a telescope. By the auxiliary member of the present invention, the discomfort of carrying the neck-hanging article can be effectively alleviated. Consequently, the auxiliary member of the present invention is industrially applicable.

While the invention has been described in terms of what is presently considered to be the most practical and preferred embodiments, it is to be understood that the invention needs not be limited to the disclosed embodiments. On the contrary, it is intended to cover various modifications and similar arrangements included within the scope of the appended claims which are to be accorded with the broadest interpretation so as to encompass all such modifications and similar structures.

## Claims

1. An auxiliary member (204, 3, 4, 7) for a neck-hanging article (29) with a strap body (20), **characterized in that** the auxiliary member (204, 3, 4, 7) comprises:
a first end (2041, 71) coupled to the strap body (20); and
a second end (2042, 72) detachably coupled to an object (28) loaded by a user, so that a stress exerted by the strap body (20) is diverted from a neck of the user to the loaded object (28).

2. The auxiliary member (204, 3, 4, 7) according to claim 1, **characterized in that** the loaded object (28) has a hang ring or a handle (280), wherein the second end (2042, 72) of the auxiliary member (204, 3, 4, 7) is detachably coupled to the hang ring or the handle (280).

3. The auxiliary member (3) according to claim 1, **characterized in that** the first end of the auxiliary member (3) has a first collar (30), and the first collar (30) is movably coupled to a contact part (203) of the strap body (20).

4. The auxiliary member (3) according to claim 3, **characterized in that** the first end of the auxiliary member (3) has at least one set of movable snap fasteners that constitute the first collar (30).

5. The auxiliary member (4) according to claim 1, **characterized in that** the first end of the auxiliary member (4) is fixed on the strap body (20) by a stitching means, a gluing means or a snap-fit means (40), or the first end of the auxiliary member (4) is integrally formed with the strap body (20).

6. The auxiliary member (3, 4) according to claim 1, **characterized in that** the second end of the auxiliary member (3, 4) has a second collar (32, 42), which is constituted by one or more sets of movable snap fasteners (31, 41).

7. The auxiliary member (204, 3, 4, 7) according to claim 1, **characterized in that** the second end (2042, 72) of the auxiliary member (204) has a hook (50), wherein the hook (50) is penetrated through a hang ring or a handle (280) of the loaded object (28), or the hook (50) is penetrated through a perforation (289) of the hang ring or the handle (280) of the loaded object (28).

8. The auxiliary member (4) according to claim 1, **characterized in that** the second end of the auxiliary member (4) has a buckling element (60) or a clipping structure that is coupled to a movable snap fastener (288) of the loaded object (28).

9. The auxiliary member (204, 3, 4, 7) according to claim 1, **characterized in that** the second end (2042, 72) of the auxiliary member (204, 3, 4, 7) has a clipping structure, and the clipping structure is coupled to a hang ring or a handle (280) of the loaded object (28).

10. A neck strap structure, **characterized in that** the neck strap structure comprises:
a strap body (20) having a contact part (203), wherein two ends (201, 202) of the strap body (20) are fixed on a neck-hanging article (29); and an auxiliary member (204, 3, 4, 7), wherein a first end (2041, 71) of the auxiliary member (204, 3, 4, 7) is coupled to the contact part (203) of the strap body (20), and a second end (2042, 72) of the auxiliary member (204, 3, 4, 7) is coupled to an object (28) loaded by a user, so that a stress exerted by the strap body (20) is diverted from a neck of the user to the loaded object (28).

11. The neck strap structure according to claim 10, **characterized in that** the first end (2041, 71) of the auxiliary member (204, 3, 4, 7) is fixed on the strap body (20) by a stitching means, a gluing means or a snap-fit means (40), or the first end (2041, 71) of the auxiliary member (204, 3, 4, 7) is integrally formed with the strap body (20).
